# EUROPEAN PATENT APPLICATION

(11) **EP 0 710 692 A2**
(43) Date of publication of application: **08.05.1996**
(21) Application number: 95307444.0
(22) Date of filing: 19.10.1995
(51) Int. Cl.: C08G 77/442, C08L 23/10, C08L 83/04

(54) **Process of bonding polyorganosiloxane to polypropylene**

(30) Priority: 27.10.1994 JP 19940287472
(71) Applicant: Dow Corning Toray Silicone Co., Ltd., Chuo-ku, Tokyo (JP)
(72) Inventor: Furukawa, Haruhiko, c/o Res. and Dev. Ctr. Dow, Ichihara-shi, Chiba Pref. (JP); Nakamura, Akihiro, c/o Res. and Dev. Ctr. Dow, Ichihara-shi, Chiba Pref. (JP); Shirahata, Akihiko, c/o Res. and Dev. Ctr. Dow, Ichihara-shi, Chiba Pref. (JP)
(74) Representative: Kyle, Diana

(57) **Abstract**

A method for preparing a composition in which a polypropylene-type resin and a polyorganosiloxane are uniformly dispersed and chemically bonded to each other is disclosed, said method comprising hot-kneading, in the absence of a radical-generating catalyst,
(A) 100 parts by weight of a substantially antioxidant-free polypropylene-type resin and
(B) 0.1 to 200 parts by weight of a polyorganosiloxane that contains at least 1 silicon-bonded alkenyl radical in each molecule.

## Description

This invention relates to a highly productive method for the preparation of polypropylene-type resin compositions in which a polypropylene-type resin and a polyorganosiloxane are homogeneously dispersed and chemically bonded to each other.

There have been numerous attempts at improving the moldability, surface lubricity, release properties, water repellency, etc., of polypropylene-type resins by blending with various types of polyorganosiloxanes JP-A 61-209243.

Unfortunately, moldings fabricated from the compositions have a poor mechanical strength. These moldings also cause, inter alia, contamination of the surrounding equipment due to bleed of the polyorganosiloxane from the molding surface. Chemical reactions between the polypropylene-type resin and the polyorganosiloxane have been attempted to deal with these problems. However, inducing a chemical reaction between polypropylene-type resin and polyorganosiloxane is highly problematic because these materials are generally incompatible. More specifically an antioxidant is blended into polypropylene-type resins immediately after their polymerization because the large number of branch structures in their molecule makes them very susceptible to oxidative decomposition by oxygen or ozone. Phenolics, amines, quinolines, hydroquinolines, mercaptans and sulfides, dithio acids, phosphites, etc., are all known as antioxidants. When polyorganosiloxane is also blended into an antioxidant-containing polypropylene-type resin, the reaction between the polypropylene-type resin and the polyorganosiloxane is weak and chemical bonding between the two essentially does not occur.

In response, chemical bonding between polypropylene-type resin and polyorganosiloxane has been pursued through radical reactions between the two which are induced by the addition of a radical-generating catalyst, such as an organoperoxide, to the hot-kneading of polypropylene-type resin and polyorganosiloxane (JP-A's 52-36898 and 6-16824).

The problem with these methods is that they yield only materials with a poor mechanical strength. This occurs because radical reactions between the polypropylene-type resin and the polyorganosiloxane proceed locally, which results in a poor dispersibility of the polyorganosiloxane in the polypropylene-type resin.

We have found that the hot-kneading of a specific polypropylene-type resin and a particular type of polyorganosiloxane will yield polypropylene-type resin compositions in which these two components are homogeneously dispersed and chemically bonded.

The present invention, therefore, relates to a method for the preparation of polypropylene-type resin compositions characterized by hot-kneading, in the absence of a radical-generating catalyst,
(A) 100 weight parts of a substantially antioxidant-free polypropylene-type resin and
(B) 0.1 to 200 weight parts of a polyorganosiloxane that contains at least 1 silicon-bonded alkenyl radical in each molecule,
whereby said polyorganosiloxane (B) becomes dispersed within and chemically bonded to said polypropylene-type resin (A).

The polypropylene-type resin constituting component (A) comprises polymers synthesized from starting materials in which propylene is the main component, but otherwise its type and other characteristics are not critical. Examples of such polypropylene polymers are the propylene homopolymers, propylene-ethylene copolymers, and copolymers of propylene with various alpha-olefins. This polypropylene resin must be substantially free of antioxidant, which for the present purposes means that antioxidant has not been intentionally blended into the polypropylene-type resin after polymerization. This condition therefore does not exclude trace amounts of additive still capable of functioning as an antioxidant that may remain from additive already present in or added to the starting propylene or additional comonomer for the polymerization process but not consumed or removed after completion of the polymerization process. The content of such antioxidant preferably does not exceed 0.01 wt% and more preferably does not exceed 0.001 wt% of component (A). Finally, neither the polymerization method nor the molecular weight are critical for polypropylene-type resin (A).

The Silicon-bonded alkenyl-functional polyorganosiloxane used as component (B) in this invention reacts with, and chemically bonds to, the polypropylene-type resin (A). This reaction is generally known as a graft reaction. The polyorganosiloxane (B) must contain at least 1 silicon-bonded alkenyl radical in each molecule. This component may have a straight-chain, partially branched, or cyclic molecular structure. The presence of the alkenyl radical is necessary for the development of the graft reaction between components (A) and (B), and the alkenyl radical is specifically exemplified by vinyl, propenyl, butenyl, pentenyl, hexenyl, and decenyl.

The non-alkenyl Silicon-bonded organic radicals in component (B) are nonexhaustively exemplified by alkyl radicals such as methyl, ethyl, and propyl; substituted alkyl radicals such as 3,3,3-trifluoropropyl, or 3-chloropropyl; cycloalkyl radicals such as cyclopentyl, or cyclohexyl; aryl radicals such as phenyl, or xylyl; aralkyl radicals such as benzyl, phenethyl, and 3-phenylpropyl; alkoxy radicals such as methoxy, ethoxy, and propoxy; and the hydroxyl radical.

The polyorganosiloxane is dimethylvinylsiloxy-endblocked polydimethylsiloxanes, dimethylvinylsiloxy-endblocked dimethylsiloxane-methylvinylsiloxane copolymers, trimethylsiloxy-endblocked polymethylvinylsiloxanes, trimethylsiloxy-endblocked dimethylsiloxane-methylvinylsiloxane copolymers, dimethylhexenylsiloxy-endblocked polydimethylsiloxanes, dimethylhexenylsiloxy-endblocked dimethylsiloxane-methylhexenylsiloxane copolymers, trimethylsiloxyendblocked polymethylhexenylsiloxanes, and trimethylsiloxy-endblocked dimethylsiloxane-methylhexenylsiloxane copolymers, among others.

Component (B) preferably has sufficient viscosity to support and facilitate initiation of the graft reaction during hot-kneading with polypropylene-type resin (A), i.e., sufficient viscosity to support the development of adequate shear energy during kneading. In specific terms, the viscosity at 25°C is preferably at least 1 million mm 2/s (centistokes) and more preferably at least 5 million mm 2/s (centistokes). Component (B) must be added at from 0.1 to 200 weight parts per 100 weight parts of component (A), and is preferably added at from 1 to 100 weight parts per 100 weight parts. No effect from the addition of component (B) appears when component (B) is added at less than 0.1 weight part per 100 weight parts of component (A). At the other extreme, when component (B) is added at more than 200 weight parts per 100 weight parts of component (A), the volumetric ratio of component (B) becomes so high that it forms a continuous phase and the resulting resin composition will not exhibit an adequate fluidity.

The hot-kneading carried out in our preparative method functions to interdisperse and mix components (A) and (B), and -through radical generation in component (A) due to the heat and shear energy applied to the system-, to initiate and advance the graft reaction with component (B). By adjusting the induction period until graft reaction initiation (hereinafter the induction period) and the reaction rate by selection of the kneading temperature and kneading rate, it is possible in our process to initiate, develop, and complete the graft reaction after having achieved a satisfactory dispersion of components (A) and (B).

Moreover, while this hot kneading does comprise kneading components (A) and (B) while heating, it is essential that this kneading be conducted in the absence of a radical-generating catalyst. Components (A) and (B) will react locally in the presence of a radical-generating catalyst and a homogeneous polypropylene-type resin composition will not be obtained.

The kneading time selected for the hot-kneading process must be sufficient for the dispersion and mixing of components (A) and (B) and for the ensuing initiation, development, and completion of the graft reaction. In specific terms, the kneading time necessary for dispersion and mixing of components (A) and (B) is preferably from 1 to 60 minutes, and more preferably from 2 to 20 minutes. The kneading time necessary for the ensuing initiation, development, and completion of the graft reaction is preferably from 1 to 60 minutes, and more preferably from 2 to 20 minutes. Longer kneading times in excess of 60 minutes should be avoided because they tend to cause degradation of the polypropylene-type resin.

Higher kneading temperatures and higher kneading rates each lead to a shorter induction period and a more rapid rate of reaction development. With these considerations, the optimal kneading temperature and kneading rate for our process must be selected to satisfy the kneading time required for dispersion and mixing of components (A) and (B), and the kneading time necessary for the subsequent initiation, development, and completion of the graft reaction. In specific terms, the preferred range for the kneading temperature is from 180°C to 260°C, and the particularly preferred range is from 200°C to 240°C. The kneading rate is determined to bring the induction period and rate of reaction development into their preferred ranges.

The equipment used in our method can be the batch kneaders and heated continuous-kneaders that are generally used for kneading thermoplastic resins. The kneading efficiency, kneading rate, and so forth depend on the design of the equipment. The following are preferred for their ability to generate a sufficient level of shear energy: the Banbury mixer among the batch devices, and, among the continuous devices, the continuous twin-screw kneading extruders or continuous kneading extruders which are equivalent in efficiency to said twin-screw extruders. Among these, the twin-screw kneading extruders are particularly preferred for their high kneading efficiencies and high heating or radiation efficiencies.

The method of this invention induces the chemical bonding of component (B) to component (A), wherein the reaction and chemical bonding of at least 50 weight% of component (B) is preferred and the reaction and chemical bonding of at least 70 weight% of component (B) is particularly preferred. Component (B) reaction conversions of below 50 weight% result in such problems as a tendency for the polyorganosiloxane (B) to bleed from the obtained polypropylene-type resin composition and a tendency for the mechanical properties to decline.

Insofar as the object of our invention is not impaired, the various modifiers and additives used for polypropylenetype resins may be added either during, or after, the hot-kneading process. These are exemplified by reinforcing fillers such as silica; molding improvers such as dimethylpolysiloxane, methylphenylsiloxane, polydiphenylsiloxane, polymethyl(3,3,3-trifluoropropyl)siloxane; antistatics; pigments; and the like.

Our method permits the blending of the various antioxidants into the product mixture after the hot-kneading of components (A) and (B). In fact, when molding operations are performed on the polypropylene-type resin composition of our invention, the addition of antioxidant is preferred since this can inhibit oxidative decomposition of the composition. The antioxidant is added at from 0.1 to 5 weight parts, and more preferably at from 0.1 to 2 weight parts, in each case per 100 weight parts of the total quantity of components (A) and (B). The nature of the antioxidant is not critical, and the following can be used: phenolics, amines, quinolines, hydroquinolines, mercaptans and sulfides, dithio acids, phosphites, inter alia. The phenolics are exemplified by 2,6-di-tert-butyl-4-methylphenol, 2,4-dimethyl-6-tert-butylphenol, 3-tert-butyl-4-hydroxyanisole, 2,6-dioctadecyl-p-cresol, and styrenated phenols; the amines are exemplified by phenylalpha-naphthylamine, phenyl-beta-naphthylamine, diphenylamine, and N,N'-diphenyl-p-phenylenediamine; the mercaptans and sulfides are exemplified by dodecyl mercaptan, tetramethylthiuram disulfide, and phenothiazine; the dithioacids are exemplified by zinc ethylphenyldithiocarbamate; and the phosphites are exemplified by triphenyl phosphite, diphenyldecyl phosphite, and phenyldidecyl phosphite.

Our polypropylene-type resin compositions have excellent mechanical properties and an excellent moldability, mold-releasability, and surface lubricity. Consequently, they are useful as molding resins. They are also useful as additives for improving the physical properties of various types of thermoplastic resins, particularly polypropylene-type resins.

The present invention will be explained in greater detail through working examples. In the working and comparative examples, "parts" denotes "weight parts", the viscosity is the value measured at 25°C, and "cSt" is an abbreviation for "centistokes". The following methods were used in the examples to measure the graft reaction initiation time, graft reaction conversion, average dispersed particle diameter of the polyorganosiloxane phase, melt index value, and surface condition of the molding.

### Graft reaction initiation time

The torque was measured during the hot-kneading process, and the point at which the torque curve turned upward is reported as the graft reaction initiation time.

### Measurement of the graft reaction conversion

A 2 g polypropylene resin composition sample was cut into approximately 1 mm cubes and placed in a roundbottom flask equipped with a reflux condenser. 100 g of hexane were added and followed by heating under reflux for 1 hour. After filtering off the hexane insolubles and transfering to a glass dish, the hexane was eliminated by heating at 60°C. Weighing then gave the hexane extraction proportion. The graft reaction conversion was calculated from the hexane extraction proportion and the total polyorganosiloxane in the sample: graft reaction conversion = (total polyorganosiloxane content in the sample - hexane extraction proportion) x 100/total polyorganosiloxane content in the sample.

### Measurement of the average particle diameter of the polyorganosiloxane phase in the polypropylene resin composition

A sample of the polypropylene resin composition was cooled with liquid nitrogen and then crushed. The average particle diameter of the polyorganosiloxane phase dispersed in the propylene-type resin composition was determined by analyzing the fracture surface with a scanning electron microscope and an x-ray microanalyzer.

### Determination of the melt index (MI) value

The MI value of a sample was measured by JIS K7210 (corresponding to ASTM D 1238-57T) using a cylinder temperature of 230°C and a load of 2.16 kg.

### Surface condition of the molding

The polypropylene resin composition was compression molded at 180°C to give a 2 mm-thick sheet. The surface of this sheet was visually inspected for uniformity and polyorganosiloxane bleed, and the results of this inspection were reported according to the following scale.
+ + : uniform surface, no polyorganosiloxane bleed
+ : uniform surface, but polyorganosiloxane is observed
x : nonuniform surface, polyorganosiloxane bleed is observed

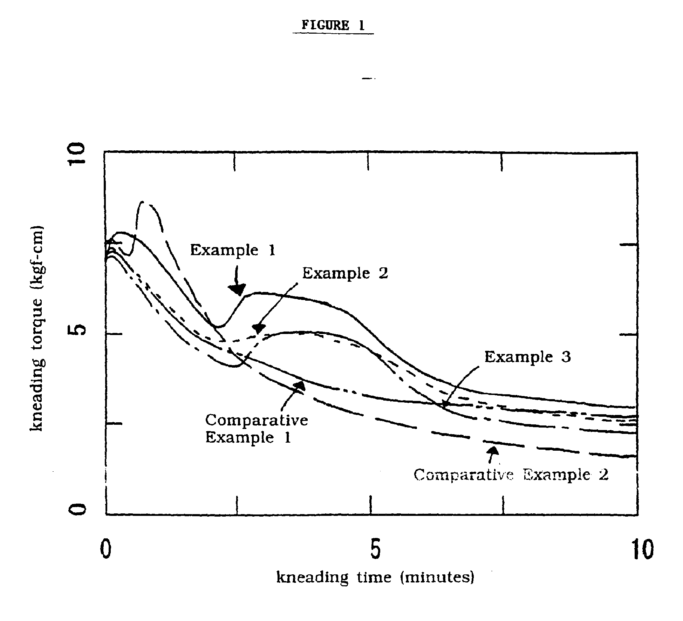

Figure 1 reports the results from measurement of the kneading torque-versus-kneading time relationship during preparation of the polypropylene-type resin compositions in Examples 1 to 3 and Comparative Examples 1 and 2.

### Example 1

Eighty grams of a dimethylvinylsiloxy-endblocked dimethylsiloxane-methylvinylsiloxane copolymer with a viscosity of 25,000,000 mm2/s (cSt) (dimethylsiloxane unit : methylvinylsiloxane unit molar ratio = 99.4 : 0.6) and 120.0 g of antioxidant-free polypropylene resin (MI value = 8 g/10 minutes, 230°C, 2.16 kgf) were introduced into a 250 mL LabPlas™ mill and hot-kneaded at 220°C for 10 minutes at a blade rotation rate of 100 rpm. 0.6 g of 2,6-di-tert-butyl-4-methylphenol antioxidant was then added to the resulting composition with kneading for 2 minutes at 100 rpm. A white, high-viscosity fluid was withdrawn from the mill and immediately poured into distilled water and cooled to yield a solid, white polypropylene resin composition. The kneading time and kneading torque recorded during this procedure is reported in Figure 1. The upturn in the torque curve in the figure is reported in Table 1 as the graft reaction initiation time. The graft reaction conversion, average particle diameter of the polyorganosiloxane phase, and appearance of the molding are also reported in Table 1 for the obtained polypropylene resin composition.

### Example 2

A solid, white polypropylene resin composition was prepared as in Example 1, but in this case using 80.0 g of dimethylvinylsiloxy-endblocked polydimethylsiloxane with a viscosity of 25,000,000 mm2/s (cSt) in place of the dimethylvinylsiloxy-endblocked dimethylsiloxane-methylvinylsiloxane copolymer used in Example 1. The properties of the obtained composition were measured as in Example 1, and these results are reported in Table 1.

### Example 3

A solid, white polypropylene resin composition was prepared as in Example 1, but in this case using 80.0 g of dimethylvinylsiloxy-endblocked dimethylsiloxane-methylhexenylsiloxane copolymer with a viscosity of 10,000,000 mm2/s (cSt) (dimethylsiloxane unit: methylhexenylsiloxane unit molar ratio = 9.9.4 : 0.6) in place of the dimethylvinylsiloxy-endblocked dimethylsiloxane-methylvinylsiloxane copolymer used in Example 1. The properties of the obtained composition were measured as in Example 1, and these results are reported in Table 1.

### Comparative Example 1

A solid, white polypropylene resin composition was prepared as in Example 1, but in this case replacing the 120.0 g of antioxidant-free polypropylene resin used in Example 1 with 120.0 g polypropylene resin (MI value = 9 g/10 minutes, 230°C, 2.16 kgf) into which 0.5 weight part 2,6-di-tert-butyl-4-methylphenol had been preliminarily blended as antioxidant. The properties of the obtained composition were measured as in Example 1, and these results are reported in Table 1.

### Comparative Example 2

A solid, white polypropylene resin composition was prepared as in Example 1, but in this case replacing the 120.0 g of antioxidant-free polypropylene resin used in Example 1 with polypropylene resin prepared as follows: 120.0 g polypropylene resin (MI value = 9 g/10 minutes, 230°C, 2.16 kgf) was preliminarily blended with 0.2 weight part of 2,6-di-tert-butyl-4-methylphenol antioxidant; 0.24 g of 2,5-dimethyl-2,5-di(tert-butylperoxy)hexane as a hexane solution was mixed in; and the hexane was then air-dried at room temperature. The properties of the obtained composition were measured as in Example 1, and these results are reported in Table 1.

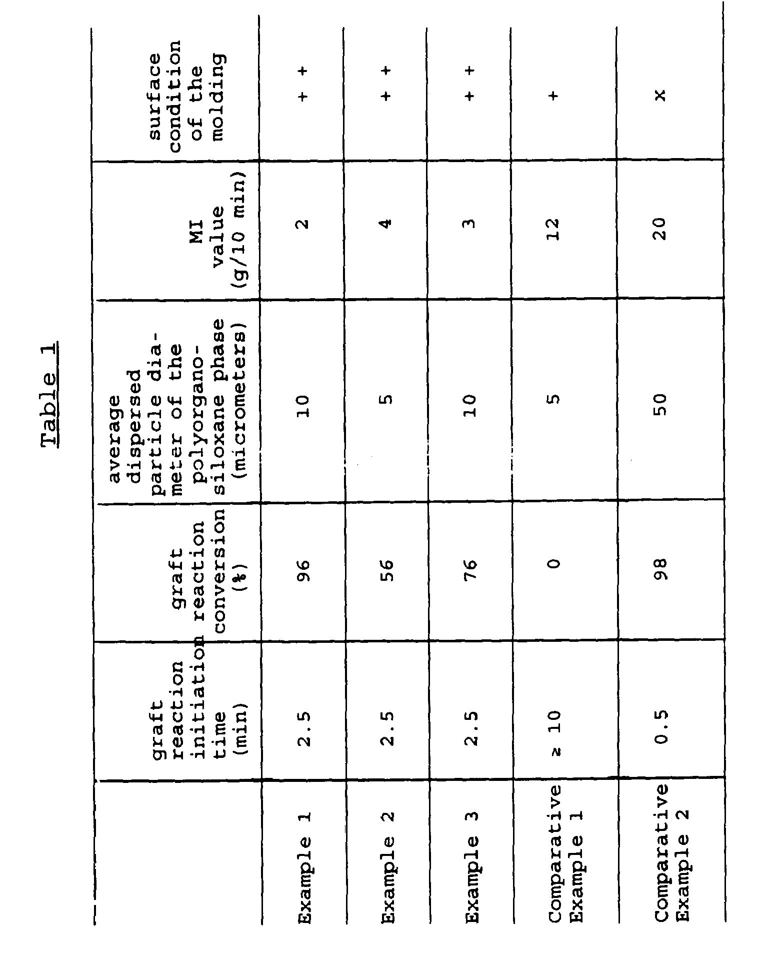

## Claims

1. A method for the preparation of a polypropylene-type resin composition comprising hot-kneading, in the absence of a radical-generating catalyst,
(A) 100 parts by weight of a substantially antioxidant-free polypropylene-type resin and
(B) 0.1 to 200 parts by weight of a polyorganosiloxane that contains at least 1 silicon-bonded alkenyl radical in each molecule,
whereby said polyorganosiloxane (B) is chemically bonded to said polypropylene-type resin (A).

2. The method according to claim 1, wherein at least 50 weight percent of said polyorganosiloxane (B) is chemically bonded to said polypropylene-type resin (A).

3. The method according to claim 2, wherein said polypropylene-type resin is selected from the group consisting of propylene homopolymers, propylene-ethylene copolymers and copolymers of propylene with an alpha-olefin.

4. The method according to claims 2 or 3, wherein the viscosity of said polyorganosiloxane (B) is at least 1 million mm2/s (centistokes) at 25°C.

5. The method according to claims 2 or 3, wherein the alkenyl radicals of said polyorganosiloxane (B) are selected from the group consisting of vinyl, propenyl, butenyl, pentenyl, hexenyl and decenyl.

6. The method according to claims 2 or 3, wherein said polyorganosiloxane (B) is selected from the group consisting of dimethylvinylsiloxy-endblocked polydimethylsiloxanes, dimethylvinylsiloxy-endblocked dimethylsiloxane-methylvinylsiloxane copolymers, trimethylsiloxy-endblocked polymethylvinylsiloxanes, trimethylsiloxy-endblocked dimethylsiloxane-methylvinylsiloxane copolymers, dimethylhexenylsiloxy-endblocked polydimethylsiloxanes, dimethylhexenylsiloxy-endblocked dimethylsiloxane-methylhexenylsiloxane copolymers, trimethylsiloxy-endblocked polymethylhexenylsiloxanes and
trimethylsiloxy-endblocked dimethylsiloxane-methylhexenylsiloxane copolymers.

7. The method according to claims 2 or 3, wherein 1 to 100 parts by weight of said polyorganosiloxane (B) are used for each 100 parts by weight of said polypropylene-type resin (A).

8. The method according to claim 1, wherein the hot-kneading is carried out at a temperature of 180°C to 260°C.

9. The method according to claim 3, wherein the hot-kneading is carried out at a temperature of 180°C to 260°C.
